# FASCICULE DE BREVET EUROPEEN

(11) **EP 2 454 107 B1**
(45) Date de publication et mention de la délivrance du brevet: **05.06.2013**
(21) Numéro de dépôt: 10742217.2
(22) Date de dépôt: 07.07.2010
(51) Int. Cl.: B60H 1/00

(54) **PROCÉDÉ DE GESTION D'UN SYSTÈME DE CLIMATISATION POUR UN VÉHICULE HYBRIDE**
HYBRIDFAHRZEUGKLIMAANLAGESTEUERUNGSVERFAHREN
CONTROL PROCESS FOR A HYBRID VEHICLE AIR CONDITIONING SYSTEM

(30) Priorité: 17.07.2009 FR 0954948
(43) Date de publication de la demande: 23.05.2012
(73) Titulaire: Peugeot Citroën Automobiles Société Anonyme, 78140 Vélizy Villacoublay (FR)
(72) Inventeur: SOURIOUX, Thomas, F-59000 Lille (FR); RIMAUX, Stéphane, F-92190 Meudon (FR)
(74) Mandataire: Rosenberg, Muriel Sylvie
(86) Numéro de dépôt international: PCT/FR2010/051433
(87) Numéro de publication internationale: WO 2011/007079

(56) Documents cités:
- WO-A-2006/057433
- WO-A-2008/025916
- DE-A1-102007 013 459
- DE-C1- 19 801 167
- US-A1- 2006 117 775
- US-A1- 2006 259 219

## Description

La présente invention concerne un procédé de gestion d'un système de climatisation pour un véhicule automobile hybride rechargeable ou non, comportant un moteur thermique et une motorisation alternative, ainsi qu'un véhicule mettant en oeuvre un tel procédé.

Les véhicules hybrides disposent en général pour la traction du véhicule, de deux énergies différentes stockées dans des réserves, l'une étant réversible et l'autre non, soit typiquement l'énergie électrique et un carburant.

Pour la liaison de puissance vers le moyen de stockage de l'énergie réversible, il est possible soit d'utiliser l'énergie contenue dans ce moyen pour appliquer par la motorisation alternative une force motrice sur le véhicule, soit d'utiliser l'énergie cinétique du véhicule, lors d'une décélération notamment, afin de remplir ce moyen de stockage.

L'énergie du réservoir de carburant est transformée en énergie mécanique par un moteur thermique. Pour une énergie alternative électrique, cette énergie est transformée en énergie mécanique par au moins une machine électrique.

Suivant les demandes du conducteur et les conditions de roulage du véhicule, on peut notamment avec la machine électrique, appliquer un couple moteur complémentaire sur les roues motrices, recharger les dispositifs de stockage d'énergie électrique au freinage du véhicule en délivrant un couple de freinage sur ces roues motrices, ou rouler uniquement avec la machine électrique sans émettre de gaz polluants.

On peut ainsi optimiser le fonctionnement du moteur thermique et réduire sa consommation. En particulier, on cherche à arrêter le moteur thermique lors des arrêts du véhicule, par exemple à un feu rouge, ou lors d'une demande de puissance suffisamment basse correspondant à un faible rendement de ce moteur thermique. Dans ce dernier cas, on utilise uniquement la machine électrique pour la traction du véhicule.

En variante, les véhicules hybrides peuvent comporter une autre source d'énergie remplaçant l'électricité pour la motorisation alternative, comme de l'air comprimé.

Ces véhicules hybrides disposent généralement d'une climatisation de l'habitacle pour refroidir l'air ambiant, comprenant un compresseur entraîné par le moteur thermique, générant un cycle d'évaporation et de liquéfaction d'un fluide caloporteur.

Un problème qui se pose est que le moteur thermique étant arrêté, le compresseur n'est plus entraîné et le véhicule ne génère plus de froid pour alimenter la climatisation. Si l'arrêt se prolonge par temps chaud, la température ambiante de l'habitacle remonte, ce qui peut être inconfortable.

Un système de climatisation connu présenté notamment dans le document FR-A1-2866831, comporte un dispositif de stockage de froid constituant une réserve de froid, qui est refroidi par la circulation du fluide lors de la marche du moteur thermique. Pendant un arrêt du véhicule, le moteur thermique étant stoppé, la réserve de froid restitue ce froid pour continuer à réfrigérer l'habitacle du véhicule.

Si l'arrêt du véhicule se prolonge la réserve de froid peut devenir vide, ce qui oblige à redémarrer le moteur thermique uniquement pour retrouver une source de froid et maintenir le même niveau de confort. Le fonctionnement du moteur thermique délivrant une faible puissance, n'est pas optimisé, comprenant une forte consommation spécifique ce qui n'est pas favorable pour réduire la consommation et les émissions polluantes. Le document US 2006/259219 A1, qui constitue l'art antérieur le plus proche, divulgue un procédé de gestion d'un système de climatisation d'un véhicule hybride, suivant le préambule de la revendication 1.

La présente invention a notamment pour but d'éviter ces inconvénients de la technique antérieure, et d'apporter une solution simple et efficace permettant une gestion optimisée de l'état de charge de la réserve de froid, en déterminant les instants de démarrage et d'arrêt du moteur thermique en fonction de la situation de roulage du véhicule, pour réduire la consommation de carburant du véhicule.

Elle propose à cet effet un procédé de gestion d'un système de climatisation d'un véhicule hybride, comportant un moteur thermique et au moins une motorisation alternative pour la traction du véhicule, ce système de climatisation comprenant un compresseur entraîné par le moteur thermique et générant du froid qui peut être stocké dans une réserve de froid, et une commande du moteur thermique qui pilote automatiquement le démarrage de ce moteur, ou son arrêt pour utiliser à la place la motorisation alternative, caractérisé en ce que ce procédé de gestion tient compte à la fois du niveau de charge de la réserve de froid, et de la situation de roulage du véhicule comprenant une certaine puissance de traction de ce véhicule, pour :
- dans une première situation de roulage le moteur thermique étant en marche, autoriser son arrêt dans le cas où le niveau de charge de la réserve de froid est supérieur à un seuil minimum, et la puissance de traction nécessaire en dessous d'un seuil maximum, ces deux seuils étant liés par une loi de variation ;
- dans une deuxième situation de roulage le moteur thermique étant à l'arrêt, demander sa mise en marche dans le cas où le niveau de charge de la réserve de froid est inférieur à un seuil maximum, et la puissance de traction nécessaire au dessus d'un seuil minimum, ces deux seuils étant aussi par une loi de variation.

Un avantage de ce procédé de gestion du moteur thermique, est que l'on peut ainsi en tenant compte du niveau de froid et de la puissance nécessaire pour la traction du véhicule, réduire au minimum les demandes de démarrage du moteur thermique, et utiliser à la place la motorisation alternative quand le rendement de ce moteur thermique est trop faible.

Le procédé de gestion du moteur thermique selon l'invention peut de plus comporter une ou plusieurs des caractéristiques suivantes, qui peuvent être combinées entre elles.

Selon un mode de réalisation, les paramètres considérés pour la situation de roulage, sont liés à la vitesse du véhicule et au couple de traction des roues motrices du véhicule.

Selon une disposition particulière, les situations de roulage qui génèrent pour un niveau de charge donné de la réserve de froid, un même résultat sur l'autorisation d'arrêt où la demande de mise en marche du moteur thermique, correspondent en grande partie à une puissance sensiblement constante.

Selon une version, sur un graphique comportant deux axes liés à la vitesse du véhicule et au couple de traction, les courbes comportant les points de fonctionnement générant un même résultat, comportent des parties d'extrémité sensiblement droites qui rejoignent les axes de vitesse ou de couple.

Ces courbes peuvent se déplacer suivant une direction sensiblement médiane entre les deux axes, vers le haut quand le niveau de charge de la réserve de froid augmente, et vers le bas quand ce niveau diminue.

Avantageusement, pour une même situation de roulage représentant une vitesse et un couple de traction, l'autorisation d'arrêt du moteur thermique se fera avec un niveau de charge de la réserve de froid, qui est plus élevé que le niveau de charge nécessaire pour la demande de démarrage de ce moteur, afin de créer un hystérésis entre la zone demandant le démarrage et la zone autorisant l'arrêt du moteur thermique.

Selon un mode de réalisation, dans le cas où la réserve de froid est pratiquement vide, on demande alors systématiquement le démarrage du moteur thermique quel que soit le niveau de couple nécessaire pour la traction du véhicule.

L'invention a aussi pour objet un véhicule hybride disposant d'un procédé de gestion d'un système de climatisation comprenant un compresseur entraîné par un moteur thermique de traction du véhicule, pour générer du froid qui peut être stocké dans une réserve de froid, le moteur thermique disposant d'une commande qui pilote automatiquement son démarrage, ou son arrêt permettant d'utiliser à la place une motorisation alternative, ce procédé de gestion comportant de plus l'une quelconque des caractéristiques précédentes.

Suivant un mode réalisation, le véhicule hybride comporte une motorisation alternative comprenant une machine électrique alimentée par des accumulateurs électriques.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma présentant les motorisations et le système de climatisation, d'un véhicule hybride comportant un procédé selon l'invention ;
- les figures 2 et 3 sont pour un premier exemple, des graphiques présentant en fonction de la vitesse du véhicule et du couple aux roues motrices, pour le premier la zone des autorisations d'arrêt du moteur thermique, et pour le deuxième la zone des demandes de démarrage de ce moteur thermique ;
- la figure 4 est pour un deuxième exemple, un graphique présentant en fonction de la vitesse de rotation de l'arbre primaire de la boîte de vitesses, et du couple appliqué sur cet arbre primaire, les zones des autorisations d'arrêt du moteur thermique, et des demandes de démarrage de ce moteur thermique ;
- la figure 5 est un graphe de décision pour la gestion des arrêts et des démarrages du moteur thermique ; et
- la figure 6 est un graphique montrant pour un cycle de fonctionnement en fonction du temps, l'état de charge de la réserve de froid avec un procédé de gestion selon l'art antérieur, et avec le procédé selon l'invention.

On décrira par la suite un véhicule hybride comportant une machine électrique, en sachant que le procédé selon l'invention peut s'appliquer tout aussi bien à un véhicule hybride comportant plusieurs machines électriques, ou d'autres types d'énergie alternative.

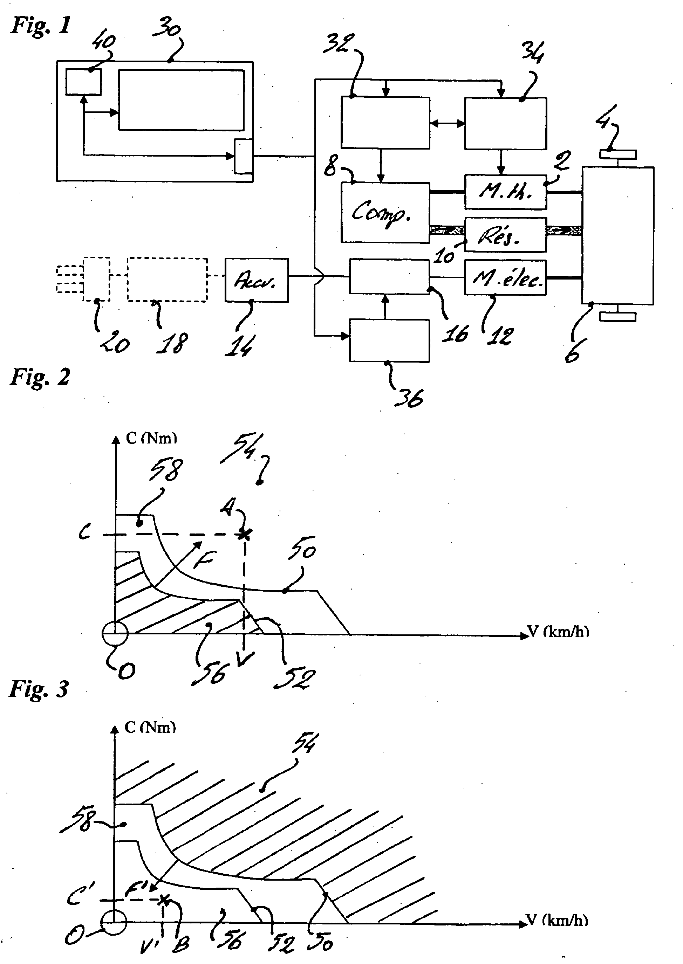

La figure 1 présente schématiquement un véhicule 6 comprenant un moteur thermique 2 apte à entraîner les roues motrices 4. Une machine électrique 12 formant une deuxième motorisation également apte à entraîner les roues motrices 4 du véhicule 6, est alimentée par des accumulateurs électriques 14, qui délivrent un courant à un onduleur 16 réalisant la mise en forme de ce courant.

La machine électrique 12 produit une énergie électrique stockée dans les accumulateurs électriques 14, notamment lors des freinages du véhicule pour récupérer de l'énergie. Les accumulateurs électriques 14 sont rechargés de plus par un chargeur 18 pouvant être embarqué, qui est branché sur le réseau par une prise de courant 20.

Le moteur thermique 2 entraîne aussi un compresseur de climatisation 8, comprimant un fluide circulant dans un circuit suivant un cycle comportant une liquéfaction, puis une évaporation produisant du froid qui alimente la climatisation du véhicule 6. Le compresseur de climatisation 8 alimente aussi une réserve de froid 10, qui accumule ce froid pour le restituer plus tard à la climatisation du véhicule 6.

Un système de gestion 30 comprenant un calculateur 40 disposant de différentes informations sur le fonctionnement du véhicule, et comportant des donnés en mémoire pour établir des stratégies de contrôle, est relié à une commande du compresseur 32, une commande du moteur thermique 34, et une commande de la machine électrique 36, pour optimiser leurs fonctionnements.

En particulier les stratégies de contrôle du système de gestion 30 agissent sur la commande du moteur thermique 34, pour modifier les ordres de démarrage ou d'arrêt de ce moteur en fonction de l'état du système de climatisation, et de la valeur de paramètres représentatifs de la situation de roulage du véhicule, comme la vitesse ou accélération, qui dépendent de la demande du conducteur.

Les figures 2 et 3 sont pour un premier exemple utilisant deux paramètres parmi d'autres représentatifs de la situation de roulage du véhicule, des graphiques comportant deux axes indiquant la vitesse V du véhicule et le couple C aux roues motrices. On notera que le produit de cette vitesse par ce couple représente une puissance de motorisation nécessaire pour déplacer le véhicule 6, suivant les demandes du conducteur.

Une courbe supérieure 50 et une courbe inférieure 52, représentent pour un niveau de charge déterminé de la réserve de froid 10, des limites où le système de gestion 30 intervient sur le dispositif de commande du moteur thermique 34, pour modifier son état de marche ou d'arrêt.

Chaque courbe 50, 52 comporte une partie centrale où le produit couple C par vitesse V est sensiblement constant, ce qui correspond à un niveau de puissance constant. Les courbes 50, 52 comportent aussi des parties d'extrémité droites, sensiblement parallèles aux axes de vitesse V ou de couple C, qui rejoignent directement ces axes.

La courbe supérieure 50 délimite une partie haute 54 correspondant à une demande de mise en marche du moteur thermique 2, et la courbe inférieure 52 délimite une partie basse 56 d'autorisation d'arrêt de ce moteur thermique. Entre les deux courbes décalées 52, 54 formant une paire, se trouve une partie intermédiaire 58, définissant une hystérésis entre la zone forçant le démarrage du moteur thermique et la zone autorisant l'arrêt du moteur thermique, nécessaire pour éviter une instabilité entre les deux modes de fonctionnement du procédé.

Chaque paire de courbes 50, 52 est valable pour un niveau de charge déterminé de la réserve de froid 10. Les courbes 50, 52 se déplacent suivant une direction sensiblement médiane entre les deux axes V, C, vers le haut suivant la flèche F quand le niveau de charge de la réserve de froid augmente, et vers le bas suivant la flèche F' quand ce niveau diminue.

Les courbes 50, 52 matérialisent des seuils de puissance de traction du véhicule, auxquels est lié par une certaine correspondance ou loi de variation, un autre seuil de niveau de charge de la réserve de froid 10.

Le fonctionnement du procédé de gestion du système de climatisation est le suivant.

Pour un fonctionnement du véhicule 6 au point A présenté figure 2, répondant à une demande du conducteur en couple C et en vitesse V, le moteur thermique 2 est en marche et délivre en même temps la puissance nécessaire pour la traction du véhicule, et pour entraîner le compresseur 8 qui fournit une climatisation de l'habitacle, tout en rechargeant la réserve de froid 10.

Le niveau de charge de la réserve de froid 10 augmentant, les courbes 50, 52 se déplacent vers le haut suivant la flèche F en fonction de la loi de variation. Quand la partie basse hachurée 56 d'autorisation d'arrêt du moteur thermique 2, atteint le point de fonctionnement A, ce point entre dans cette partie basse et le système de gestion 30 délivre au dispositif de commande 34, une autorisation d'arrêt de ce moteur thermique.

On estime alors que la charge de la réserve de froid 10 est suffisamment élevée, avec une puissance nécessaire pour la traction du véhicule suffisamment faible, pour ne plus imposer au moteur thermique 2 un fonctionnement permettant cette charge, et laisser la commande 34 de ce moteur choisir si il veut arrêter le moteur thermique pour passer sur une traction électrique 12 alimentée par les accumulateurs électriques 14, dans le cas où ce mode de fonctionnement est plus économe en énergie.

On prélève alors du froid dans la réserve de froid 10, pour alimenter la climatisation.

Pour un fonctionnement du véhicule 6 au point B présenté figure 3, répondant à une autre demande du conducteur en couple C' et en vitesse V', le moteur thermique 2 est à l'arrêt. La traction du véhicule 6 est assurée par la machine électrique 12 qui prélève de l'énergie dans les accumulateurs électriques 14, et le froid alimentant la climatisation est prélevé dans la réserve de froid 10.

Le niveau de charge de la réserve de froid 10 diminuant, les courbes 50, 52 se déplacent vers le bas suivant la flèche F' en fonction de la loi de variation. Quand la partie haute hachurée 54 de demande de démarrage du moteur thermique 2 atteint le point de fonctionnement B, ce point entre dans cette partie haute, et le système de gestion 30 délivre à la commande 34 du moteur thermique 2 un ordre de démarrage de ce moteur.

On estime alors que la charge de la réserve de froid 10 est insuffisante, avec une puissance nécessaire pour la traction du véhicule suffisamment importante, pour qu'il soit plus favorable pour le bilan énergétique, de remettre en marche le moteur thermique 2 afin d'assurer à la fois cette traction est une recharge de la réserve de froid 10.

Le point O d'origine des axes, correspond à la position de déplacement des courbes 50, 52 dans le cas où la réserve de froid 10 est pratiquement vide. On passe alors forcément dans la partie haute hachurée 54 de demande de démarrage du moteur thermique 2, quel que soit le niveau de couple nécessaire pour la traction du véhicule, et il faut remettre en marche ce moteur thermique pour recharger la réserve de froid 10.

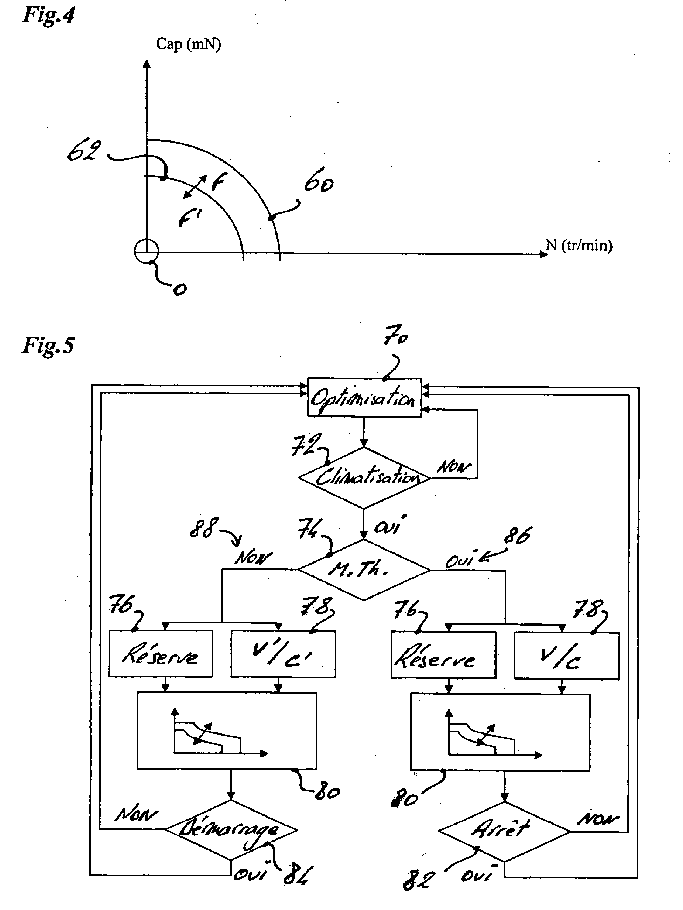

La figure 4 est pour un deuxième exemple utilisant deux autres paramètres représentatifs de la situation de roulage du véhicule, un graphique comportant deux axes indiquant la vitesse de rotation N de l'arbre primaire de la boîte de vitesses, et le couple Cap appliqué sur cet arbre primaire. On notera que le produit de cette vitesse N par ce couple Cap représente aussi une puissance de motorisation nécessaire pour déplacer le véhicule 6 suivant les demandes du conducteur.

Comme pour l'exemple ci-dessus, la courbe supérieure 60 et la courbe inférieure 62, représentent aussi pour un niveau de charge déterminé de la réserve de froid 10, des limites où le système de gestion 30 intervient sur le dispositif de commande du moteur thermique 34, pour modifier son état de marche ou d'arrêt.

Chaque paire de courbes 60, 62 est valable pour un niveau de charge déterminé de la réserve de froid 10, et se déplace en fonction de la loi de variation. Les courbes 60, 62 se déplacent de la même manière suivant une direction sensiblement médiane entre les deux axes N, Cap, vers le haut suivant la flèche F quand le niveau de charge de la réserve de froid 10 augmente, et vers le bas suivant la flèche F' quand ce niveau diminue.

On notera que dans cet exemple, la forme générale des courbes supérieure 60 et inférieure 62 a l'allure générale d'un arc de cercle, centré autour du point O.

Le graphe de décision présenté figure 5, et mis en oeuvre par le système de gestion 30, utilise les valeurs V de vitesse du véhicule et C du couple aux roues motrices.

Le graphe de décision comporte une fonction d'optimisation 70 liée à la commande du moteur thermique, qui regarde d'abord si la climatisation du véhicule est activée 72. Dans le cas positif, on regarde ensuite si le moteur thermique est en marche 74.

Dans le cas où le moteur thermique est en marche 86, on se trouve dans la configuration présentée figure 2. Le système de gestion regarde le niveau de charge 76 de la réserve de froid, et les valeurs 78 de couple C aux roues motrices et V de vitesse du véhicule, pour les comparer aux positions des courbes 80 établies pour ce point de fonctionnement, en fonction de la loi de variation.

Le résultat de cette comparaison peut donner une autorisation d'arrêt 82 du moteur thermique, transmise à la fonction d'optimisation 70 pour être délivrée à la commande de ce moteur.

Dans le cas où le moteur thermique est à l'arrêt 88, on se trouve dans la configuration présentée figure 3. Le système de gestion regarde le niveau de charge 76 de la réserve de froid, et les valeurs 78 de couple C' aux roues motrices et V' de vitesse du véhicule, pour les comparer aux positions des courbes 80 établies pour ce point de fonctionnement.

Le résultat de cette comparaison peut donner une demande de démarrage 84 du moteur thermique, transmise à la fonction d'optimisation 70 pour être délivrée à la commande de ce moteur.

On peut grâce au procédé selon l'invention, tout en conservant un même confort avec une climatisation du véhicule qui reste active sans interruption, optimiser le choix de la source d'énergie, le moteur thermique ou la machine électrique, pour réduire la consommation d'énergie non renouvelable et les émissions polluantes.

En effet, on profite au mieux des moments où la puissance nécessaire pour la traction du véhicule est assez élevée, pour recharger la réserve de froid qui est suffisamment basse, tout en assurant cette traction avec le moteur thermique qui comporte alors un bon rendement dans ce cas de fonctionnement.

On utilise ensuite le niveau élevé de réserve de froid ainsi constitué, pour les moments où la puissance nécessaire pour la traction du véhicule étant assez faible, éviter de remettre en marche le moteur thermique en prélevant du froid sur cette réserve, la traction du véhicule étant alors assurée avec l'énergie électrique ce qui évite de faire fonctionner le moteur thermique avec un mauvais rendement dans ce cas de fonctionnement.

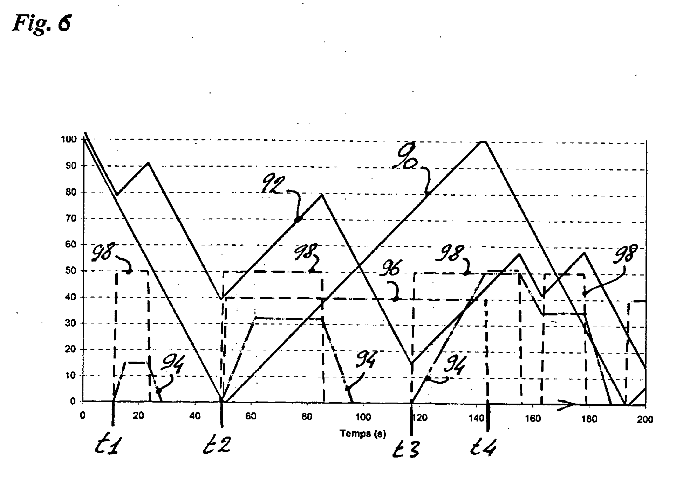

La figure 6 est un graphique montrant pour un cycle de fonctionnement en fonction du temps, l'état de charge de la réserve de froid 90 avec un procédé de gestion selon l'art antérieur, et l'état de charge 92 avec le procédé selon l'invention.

La vitesse du véhicule est présentée par la courbe 94, et comprend trois démarrages successifs au temps t1, t2 et t3, avec des temps de repos entre deux où on souhaite maintenir la climatisation active.

Pour le procédé de gestion suivant l'art antérieur, on attend que le niveau de charge de la réserve de froid 90 descende à 0, pour la recharger au temps t2. Ce temps t2 correspond de manière fortuite dans cet exemple, à un redémarrage du véhicule 94, et donc du moteur thermique comme présenté par la courbe 96.

On garde ensuite le moteur thermique en marche 96, indépendamment de la puissance nécessaire pour la traction du véhicule, jusqu'au temps t4 où la charge de la réserve de froid 90 est à son maximum. A ce moment seulement, on arrête le moteur thermique pour utiliser à la place la motorisation électrique pour la traction du véhicule.

Pour le procédé de gestion suivant l'invention, on utilise au moment t1 une demande de puissance suffisamment élevée pour la traction du véhicule, alors que le niveau de charge de la réserve de froid 92 est suffisamment bas, pour mettre en marche le moteur thermique, et en même temps recharger la réserve de froid. On fera de même au temps t2 et t3, de démarrage du véhicule.

Ce procédé de gestion du moteur thermique est simple à mettre en oeuvre, et peut être intégré de manière économique dans un calculateur de supervision existant, notamment celui de la gestion de la climatisation du véhicule, ou de commande du moteur.

En variante on peut appliquer ce procédé de gestion sur des véhicules hybrides comportant d'autres sources alternatives d'énergie, comme par exemple de l'air comprimé.

## Revendications

1. Procédé de gestion d'un système de climatisation d'un véhicule hybride, comportant un moteur thermique (2) et au moins une motorisation alternative (12) pour la traction du véhicule, ce système de climatisation comprenant un compresseur (8) entraîné par le moteur thermique (2) et générant du froid qui peut être stocké dans une réserve de froid (10), et une commande (34) du moteur thermique qui pilote automatiquement le démarrage de ce moteur, ou son arrêt pour utiliser à la place la motorisation alternative, **caractérisé en ce que** ce procédé de gestion tient compte à la fois du niveau de charge (92) de la réserve de froid, et de la situation de roulage du véhicule comprenant une certaine puissance de traction de ce véhicule, pour :
- dans une première situation de roulage le moteur thermique (2) étant en marche, autoriser son arrêt (82) dans le cas où le niveau de charge (92) de la réserve de froid (10) est supérieur à un seuil minimum, et la puissance de traction nécessaire en dessous d'un seuil maximum, ces deux seuils étant liés par une loi de variation ;
- dans une deuxième situation de roulage le moteur thermique (2) étant à l'arrêt, demander sa mise en marche (84) dans le cas où le niveau de charge de la réserve de froid (10) est inférieur à un seuil maximum, et la puissance de traction nécessaire au dessus d'un seuil minimum, ces deux seuils étant aussi liés par une loi de variation.

2. Procédé de gestion selon la revendication 1, **caractérisé en ce que** les paramètres considérés pour la situation de roulage, sont liés à la vitesse (V) du véhicule et au couple de traction (C) des roues motrices du véhicule.

3. Procédé de gestion selon la revendication 2, **caractérisé en ce que** les situations de roulage qui génèrent pour un niveau de charge donné de la réserve de froid (10), un même résultat sur l'autorisation d'arrêt où la demande de mise en marche du moteur thermique (2), correspondent en grande partie à une puissance sensiblement constante.

4. Procédé de gestion selon la revendication 3, **caractérisé en ce que** sur un graphique comportant deux axes liés à la vitesse (V) du véhicule et au couple (C) de traction, les courbes (52, 54) comportant les points de fonctionnement générant un même résultat, comportent des parties d'extrémité sensiblement droites qui rejoignent les axes de vitesse ou de couple.

5. Procédé de gestion selon la revendication 4, **caractérisé en ce que** les courbes (52, 54) se déplacent suivant une direction sensiblement médiane entre les deux axes (V, C), vers le haut quand le niveau de charge de la réserve de froid (10) augmente, et vers le bas quand ce niveau diminue.

6. Procédé de gestion selon l'une quelconque des revendications précédentes, **caractérisé en ce que** pour une même situation de roulage représentant une vitesse (V) et un couple de traction (C), l'autorisation d'arrêt du moteur thermique (2) se fera avec un niveau de charge de la réserve de froid (10), qui est plus élevé que le niveau de charge nécessaire pour la demande de démarrage de ce moteur, afin de créer un hystérésis entre la zone demandant le démarrage et la zone autorisant l'arrêt du moteur thermique.

7. Procédé de gestion selon l'une quelconque des revendications précédentes, **caractérisé en ce que** dans le cas où la réserve de froid (10) est pratiquement vide, on demande alors systématiquement le démarrage du moteur thermique (2) quel que soit le niveau de couple nécessaire pour la traction du véhicule.

8. Véhicule hybride disposant d'un procédé de gestion d'un système de climatisation comprenant un compresseur (8) entraîné par un moteur thermique (2) de traction du véhicule, pour générer du froid qui peut être stocké dans une réserve de froid (10), le moteur thermique disposant d'une commande (34) qui pilote automatiquement son démarrage, ou son arrêt permettant d'utiliser à la place une motorisation alternative, **caractérisé en ce que** ce procédé de gestion est réalisé suivant l'une quelconque des revendications précédentes.

9. Véhicule hybride selon la revendication 8, **caractérisé en ce qu'**il comporte, une motorisation alternative comprenant une machine électrique (12) alimentée par des accumulateurs électriques (14).

## Patentansprüche

1. Hybridfahrzeugklimaanlagensteuerungsverfahren, das einen Verbrennungsmotor (2) und mindestens einen alternativen Antrieb (12) für das Ziehen des Fahrzeugs aufweist, wobei dieses Klimaanlagensystem einen Kompressor (8) aufweist, der von dem Verbrennungsmotor (2) angetrieben wird und Kälte erzeugt, die in einer Kältereserve (10) gespeichert werden kann, und eine Steuerung (34) des Verbrennungsmotors, die das Anlassen dieses Motors oder sein Stoppen automatisch steuert, um stattdessen den alternativen Antrieb zu verwenden, **dadurch gekennzeichnet, dass** dieses Verwaltungsverfahren sowohl das Aufladeniveau (92) der Kältereserve als auch die Fahrsituation des Fahrzeugs, die eine gewisse Zugkraft dieses Fahrzeugs aufweist, berücksichtigt, um:
- in einer ersten Fahrsituation, in der der Verbrennungsmotor (2) in Betrieb ist, sein Stoppen (82) in dem Fall zu gestatten, in dem das Ladeniveau (92) der Kältereserve (10) größer ist als ein Mindestschwellenwert und die erforderliche Zugleistung unterhalb eines maximalen Schwellenwerts ist, wobei diese zwei Schwellenwerte durch ein Variationsgesetz verbunden sind,
- in einer zweiten Fahrsituation, in der der Verbrennungsmotor (2) stillsteht, seinen Betrieb (84) in dem Fall zu fordern, in dem das Ladeniveau der Kältereserve (10) niedriger ist als ein maximaler Schwellenwert und die erforderliche Zugleistung oberhalb eines Mindestschwellenwerts liegt, wobei diese zwei Schwellenwerte ebenfalls durch ein Variationsgesetz verbunden sind.

2. Verwaltungsverfahren nach Anspruch 1, **dadurch gekennzeichnet, dass** die für die Fahrsituation betrachteten Parameter mit der Geschwindigkeit (V) des Fahrzeugs und dem Zugmoment (C) der Antriebsräder des Fahrzeugs verbunden sind.

3. Verwaltungsverfahren nach Anspruch 2, **dadurch gekennzeichnet, dass** die Fahrsituationen, die für ein gegebenes Ladeniveau der Kältereserve (10) ein selbes Resultat hinsichtlich der Stoppgenehmigung oder der Forderung nach Ingangsetzen des Verbrennungsmotors (2) ergeben, großteils einer im Wesentlichen konstanten Leistung entsprechen.

4. Verwaltungsverfahren nach Anspruch 3, **dadurch gekennzeichnet, dass** die Kurven (52, 54), die die Betriebspunkte enthalten, die ein selbes Resultat ergeben, auf einer Grafik, die zwei Achsen aufweist, die mit der Geschwindigkeit (V) des Fahrzeugs und dem Zugmoment (C) verbunden sind, im Wesentlichen gerade Endteile aufweisen, die zu der Geschwindigkeits- oder Momentachse stoßen.

5. Verwaltungsverfahren nach Anspruch 4, **dadurch gekennzeichnet, dass** sich die Kurven (52, 54) entlang einer im Wesentlichen mittleren Richtung zwischen den zwei Achsen (V, C) nach oben verlagern, wenn das Ladeniveau der Kältereserve (10) zunimmt, und nach unten, wenn dieses Niveau abnimmt.

6. Verwaltungsverfahren nach einem der vorhergehenden Ansprüche, **dadurch gekennzeichnet, dass** für eine selbe Fahrsituation, die eine Geschwindigkeit (V) und ein Zugmoment (C) aufweist, die Stoppgenehmigung des Verbrennungsmotors (2) bei einem Ladeniveau der Kältereserve (10) erfolgt, das höher ist als das Ladeniveau, das für die Anlassanfrage dieses Motors erforderlich ist, um eine Hysterese zwischen dem Bereich, der das Anlassen fordert, und dem Bereich, der das Stoppen des Verbrennungsmotors gestattet, zu schaffen.

7. Verwaltungsverfahren nach einem der vorhergehenden Ansprüche, **dadurch gekennzeichnet, dass** man in dem Fall, in dem die Kältereserve (10) so gut wie leer ist, systematisch das Anlassen des Verbrennungsmotors (2), ungeachtet des erforderlichen Momentniveaus für das Ziehen des Fahrzeugs fordert.

8. Hybridfahrzeug, das über ein Klimaanlagenverwaltungsverfahren verfügt, das einen Kompressor (8) aufweist, der von einem Verbrennungsmotor (2) zum Ziehen des Fahrzeugs angetrieben wird, um Kälte zu erzeugen, die in einer Kältereserve (10) gespeichert werden kann, wobei der Verbrennungsmotor über eine Steuerung (34) verfügt, die sein Anlassen oder sein Stoppen automatisch steuert, die es erlaubt, stattdessen einen alternativen Antrieb zu verwenden, **dadurch gekennzeichnet, dass** dieses Verwaltungsverfahren gemäß einem der vorhergehenden Ansprüche ausgeführt wird.

9. Hybridfahrzeug nach Anspruch 8, **dadurch gekennzeichnet, dass** es einen alternativen Antrieb aufweist, der eine Elektromaschine (12) aufweist, die von elektrischen Akkumulatoren (14) versorgt wird.

## Claims

1. A method for the management of an air-conditioning system of a hybrid vehicle, comprising a heat engine (2) and at least one alternative motorisation (12) for the traction of the vehicle, this air-conditioning system including a compressor (8) driven by the heat engine (2) and generating cold which can be stored in a cold storage (10), and a command unit (34) of the heat engine which controls automatically the starting of this engine, or its stopping to use instead the alternative motorisation, **characterized in that** this management method takes into account both the charge level (92) of the cold storage and of the driving situation of the vehicle including a certain traction power of this vehicle, for:
- in a first driving situation where the heat engine (2) is running, authorizing its stopping (82) in the case where the charge level (92) of the cold store (10) is greater than a minimum threshold, and the necessary traction power is below a maximum threshold, these two thresholds being linked by a variation law;
- in a second driving situation where the heat engine (2) is not running, requesting its starting (84) in the case where the charge level of the cold store (10) is less than a maximum threshold, and the necessary traction power is above a minimum threshold, these two thresholds also being linked by a variation law.

2. The management method according to Claim 1, **characterized in that** the parameters taken into account for the driving situation are linked to the speed (V) of the vehicle and to the traction torque (C) of the driving wheels of the vehicle.

3. The management method according to Claim 2, **characterized in that** the driving situations which generate, for a given charge level of the cold storage (10), the same result on the authorisation to stop or the request to start the heat engine (2), correspond for the most part to a substantially constant power.

4. The management method according to Claim 3, **characterized in that** on a graph comprising two axes linked to the speed (V) of the vehicle and to the traction torque (C), the curves (52, 54) comprising the operating points generating the same result, comprise substantially straight extremity portions which join the speed or torque axes.

5. The management method according to Claim 4, **characterized in that** the curves (52, 54) move according to a substantially median direction between the two axes (V, C), upward when the charge level of the cold storage (10) increases, and downward when this level decreases.

6. The management method according to any one of the preceding claims, **characterized in that** for a same driving situation representing a speed (V) and a traction torque (C), the authorisation to stop the heat engine (2) will be issued with a charge level of the cold storage (10) which is higher than the charge level necessary for the request to start this engine, so as to create a hysteresis between the zone requesting the starting and the zone authorising the stopping of the heat engine.

7. The management method according to any one of the preceding claims, **characterized in that** in the case where the cold storage (10) is practically empty, the start of the heat engine (2) is systematically requested regardless of the torque level necessary for the traction of the vehicle.

8. A hybrid vehicle having a management method of an air-conditioning system including a compressor (8), driven by a heat engine (2) for traction of the vehicle, to generate cold which can be stored in a cold storage (10), the heat engine having a command unit (34) which automatically controls its starting or its stopping, permitting instead the use of an alternative motorisation, **characterized in that** this management method is realized according to any one of the preceding claims.

9. The hybrid vehicle according to Claim 8, **characterized in that** it comprises an alternative motorisation including an electric machine (12) supplied by electric accumulators (14).
